# EUROPÄISCHE PATENTANMELDUNG

(11) **EP 3 763 643 A1**
(43) Veröffentlichungstag der Anmeldung: **13.01.2021**
(21) Anmeldenummer: 19184903.3
(22) Anmeldetag: 08.07.2019
(51) Int. Cl.: B65G 43/02

(54) **SYSTEM UND VERFAHREN ZUR ZUSTANDSÜBERWACHUNG BEIM BETRIEB EINES FÖRDERSYSTEMS**

(71) Anmelder: Siemens Aktiengesellschaft, 80333 München (DE)
(72) Erfinder: UNNIKRISHNA KARNAVER, Arun Kumar, Opp. Lulu Village (AE); KÖNIG, Frank, 44879 Bochum (DE); CASTELINO, Ivan, Al Mamzar (AE); KIMLING, Dominik, 1603 Dubai (AE); MATHAD, Harsha Kallayya, Dubai (AE)
(74) Vertreter: Maier, Daniel Oliver

(57) **Zusammenfassung**

Die Erfindung offenbart ein System und ein Verfahren zur Zustandsüberwachung beim Betrieb eines Fördersystems, insbesondere eines Flughafen-Gepäckfördersystems, das Fördereinheiten (3) umfasst, zudem umfassend ein Hintergrundsystem. Eine Fördereinheit (3) weist eine einzelne Förderstrecke und/oder eine Gruppe von Förderstrecken auf. Eine individuelle Stromcharakteristik einer einzelnen Fördereinheit (3) ist erfassbar. Jede einzelne Fördereinheit (3) weist bei fehlerfreiem Betrieb eine definierte Stromcharakteristik auf und das Hintergrundsystem ist ausgestaltet, diese und die tatsächliche Stromcharakteristik dieser Fördereinheit (3) zu registrieren. Das Hintergrundsystem ist ausgestaltet, die tatsächliche Stromcharakteristik von dieser Fördereinheit (3) einer Analyse zu unterziehen und anhand dieser Analyse einen drohenden Verschleiß und/oder eine Fehlfunktion des Fördersystems, insbesondere einer Förderstrecke dieser Fördereinheit (3), zu signalisieren.

## Beschreibung

Die vorliegende Erfindung bezieht sich auf ein System und Verfahren zur Zustandsüberwachung beim Betrieb eines Fördersystem gemäß den unabhängigen Patentansprüchen.

Eine vorbeugende Wartung von Fördersystemen ist von einigen Flughäfen als Maßnahme übernommen worden, um Systemausfälle zu reduzieren. Diese vorbeugende Wartung nach einem regelmäßigen Schema verringert zwar die Ausfallhäufigkeit, aber benötigt mehr Ersatzteile und Arbeitszeit als eine run-to-failure-Wartung, die erst nach stattgefundenem Ausfall stattfindet. Zudem können mit vorbeugender Wartung unerwartete Systemausfälle nicht komplett vermieden werden, sondern treten nur mit verringerter Häufigkeit auf. Eine bessere Art, Ausfälle zu vermeiden, ist eine Instandhaltungsstrategie, die den tatsächlichen Systemzustand überwacht, so dass eine Restnutzungsdauer abschätzbar ist. Anhand der Restnutzungsdauer kann der Betreiber des Fördersystems das Wartungsaufkommen planen.

Fördersysteme werden vorbeugend mit dem Ziel kontrolliert und gewartet, um potentielle, zu großen Systemausfallzeiten führende Probleme zu finden und zu identifizieren. Es existieren Zustandsüberwachungssysteme basierend auf Vibrations- und Temperaturüberwachung einzelner Komponenten. Solche Lösungen sind jedoch nicht trivial auf bestehende Förderanlagensysteme nachrüstbar. Und auch wenn bei derartigen Lösungen plötzliche, auf Ausfälle schließende Änderungen detektierbar sind, ist immer noch eine manuelle Inspektion erforderlich, die sehr stark von Erfahrung, Geschicklichkeit und Urteil eines Servicetechnikers abhängig ist. Daher wird meist ein run-to-failure-Ansatz verfolgt, Zustandsüberwachung wird nur vereinzelt eingesetzt.

Im Flughafenbereich am gebräuchlichsten sind Systeme auf SPS-Basis, die mit einem IT-Host-System und SCADA zur Visualisierung kommunizieren. Sensorsignale werden über Eingabemodule in Feldbustechnik erfasst. Fördermotoren werden von Motorstartern oder Frequenzumrichtern gesteuert.

Mit dezentraler Motorsteuerung werden Fördermotoren für die Gepäckförderung am Flughafen gesteuert. Es gibt jedoch immer noch Gepäckfördersysteme, die mit zentraler Motorsteuerungstechnologie arbeiten, diese werden jedoch schrittweise durch dezentrale Technologie modernisiert.

Zur Überwachung wurden über mehrere Jahrzehnte Motorschutzschalter auf der Basis von Bimetall-Auslösemechanismen in Kombination mit Schützen herangezogen. Bei einem Durchsatz von mehreren tausend Gepäckstücken starten und stoppen die Förderer ständig. Eine fortschrittlichere Technologie, die erweiterte Start- und Stoppvorgänge bewältigen kann, war erforderlich. Die Industrie antwortete mit der Erfindung von dezentralen Motorstartern, Frequenzumrichtern und Servoreglern, die in der Nähe des Fördermotors im Feld installiert wurden, indem sie Elektronik verwendeten, um zu schalten und die Antriebe gegen Überstrom zu schützen. Solche elektronischen Motorsteuerungsgeräte bieten die Möglichkeit, Daten wie aktuellen Fahrstrom, Anzahl an Starts und Stopps, Laufzeit und aktuellen Zustandsverlauf mit Zeitstempel anzugeben und dem Gepäckfördersystem BHS zur Verfügung zu stellen. Gleichzeitig mit der Entwicklung dezentraler Antriebsmanagementtechnologie wurden die wichtigsten Gepäckfördersysteme erweitert. Flughäfen sind nicht bereit, nach jeder Systemerweiterung mehr Wartungspersonal einzustellen. Der anhaltende Wettbewerb auf dem Dienstleistungsmarkt macht moderne Wartungsmethoden erforderlich, die Systemausfälle bei geringem Wartungsaufwand so weit wie möglich verhindern.

Der vorliegenden Erfindung liegt daher die Aufgabe zugrunde, eine fortschrittlichere Zustandsüberwachungstechnologie bereitzustellen. Diese Aufgabe wird durch die in den unabhängigen Ansprüchen beschriebenen Lösungen gelöst. Es werden in bestehenden Systemen verfügbare Daten verwendet, die von dezentraler Motormanagementhardware als Grundlage für eine moderne Zustandsüberwachung für Gepäckfördersysteme in großem Maßstab bereitgestellt werden.

Die erfindungsgemäße Vorrichtung betrifft ein System zur Zustandsüberwachung beim Betrieb eines Fördersystems, insbesondere eines Flughafen-Gepäckfördersystems, das Fördereinheiten umfasst, zudem umfassend ein Hintergrundsystem.
a) Eine Fördereinheit weist eine einzelne Förderstrecke und/oder eine Gruppe von Förderstrecken auf.
b) Eine individuelle Stromcharakteristik einer einzelnen Fördereinheit ist erfassbar.
c) Jede einzelne Fördereinheit weist bei fehlerfreiem Betrieb eine definierte Stromcharakteristik auf und das Hintergrundsystem ist ausgestaltet, diese und die tatsächliche Stromcharakteristik dieser Fördereinheit zu registrieren.
d) Das Hintergrundsystem ist ausgestaltet, die tatsächliche Stromcharakteristik von dieser Fördereinheit einer Analyse zu unterziehen und anhand dieser Analyse einen drohenden Verschleiß und/oder eine Fehlfunktion des Fördersystems, insbesondere einer Förderstrecke dieser Fördereinheit, zu signalisieren.

Unter einer Stromcharakteristik werden sämtliche abgreifbare Strom- und Spannungswerte einer einzelnen Fördereinheit und des Gesamtsystems verstanden, wobei eine Stromcharakteristik einen einzelnen oder mehrere Messwerte gleichen oder unterschiedlichen Typs umfasst. Vorzugsweise und einfach messbar sind Stromwerte. Anhand der Stromcharakteristik kann ein Verbrauch dieser Fördereinheit bestimmt werden. Typischerweise und einfach messbar ist die Stromstärke, aber es können auch Spannung, Stromdichte, elektrische Arbeit usw. gemessen werden. Die Stromcharakteristik kann eine Momentaufnahme sein oder über einen gewissen Zeitraum (punktuell oder kontinuierlich) gemessen werden. Unter regulärer Belastung der Förderstrecke wird ein Nennstrom verbraucht. Bei Nulllast der Förderstrecke wird ein Leerlaufstrom verbraucht.

Die erfindungsgemäße Lösung kann durch verschiedene, jeweils für sich vorteilhafte und, sofern nicht anders ausgeführt, beliebig miteinander kombinierbare Ausführungsformen weiter verbessert werden. Auf diese Ausführungsformen und die mit ihnen verbundenen Vorteile wird im Folgenden eingegangen.

Gemäß einer Ausführungsform kann die Fördereinheit einen oder mehrere dezentrale Motorstarter aufweisen und/oder eine Förderstrecke kann mindestens ein Förderband umfassen. Das Fördersystem ist mit dezentraler Motorstartertechnologie antreibbar.

Damit eine einfache Messgröße zur Analyse heranziehbar ist, kann die Stromcharakteristik einer Fördereinheit eine von der Fördereinheit verbrauchte Strommenge umfassen.

Das System kann gemäß einer Ausführungsform ein Abgreifmittel umfassen, welches ausgestaltet ist, die Stromcharakteristik der Fördereinheit bei Nulllast und/oder bei regulärer Belastung punktuell und/oder über einen zeitlichen Verlauf hinweg abzugreifen und an das Hintergrundsystem zu übermitteln. So kann das Abgreifmittel ausgestaltet sein, eine von der Fördereinheit verbrauchte bzw. durch diese fließende Strommenge abzugreifen. Die Nulllast kann vorteilhaft gemessen werden direkt im Anschluss an eine erfolgte Belastung bzw. durchgeführte Förderung kurz bevor die Fördereinheit abstellt oder kurz vor einer Aufnahme eines Stückguts durch die Fördereinheit.

Gemäß einer Ausführungsform kann das Hintergrundsystem ausgestaltet sein, die tatsächliche Stromcharakteristik der Fördereinheit über einen zeitlichen Verlauf hinweg und/oder über eine Mehrzahl an Fördereinheiten zu erfassen, zu vergleichen und zu analysieren. So kann eine sich entwickelnde Anomalie einer Fördereinheit basierend auf der eigenen, ursprünglichen Stromcharakteristik der Fördereinheit, oder im Vergleich mit anderen, vorzugsweise gleichartigen Fördereinheiten festgestellt werden, und so selbstkonsistent kalibriert werden.

Gemäß einer Ausführungsform kann die Analyse Steigung und/oder Variabilität der benötigten Strommenge umfassen (über einen Zeitraum steigende, fallende oder schwankende Ströme).

Gemäß einer weiteren Ausführungsform kann das Hintergrundsystem ausgestaltet sein, anhand der Analyse Rückschlüsse zu schließen auf eine Art der Fehlfunktion und/oder auf eine bis zu einem voraussichtlichen Ausfall der Fördereinheit verbleibende Dauer. So ist eine notwendige Wartung besser planbar.

Gemäß einer weiteren Ausführungsform kann das Hintergrundsystem ausgestaltet sein, anhand der durchgeführten Analysen aller Fördereinheiten ein Zustandsabbild aller Fördereinheiten in einer Abbildung und/oder eine Dringlichkeits-Rangordnung zur Wartung aller erfasster Fördereinheiten zu generieren. Die Wartung ist so noch besser planbar.

Hinsichtlich eines Verfahrens wird die vorstehend genannte Aufgabe gelöst durch ein Verfahren zur Zustandsüberwachung beim Betrieb eines Fördersystems, insbesondere eines Flughafen-Gepäckfördersystems, das Fördereinheiten umfasst. Eine Fördereinheit weist eine einzelne Förderstrecke und/oder eine Gruppe von Förderstrecken auf. Und jede einzelne Fördereinheit weist bei fehlerfreiem Betrieb einen individuelle Stromcharakteristik auf. Das Verfahren umfasst die Verfahrensschritte:
a) Antreiben des Fördersystems und Erfassen der individuellen Stromcharakteristik einer einzelnen Fördereinheit.
b) Abgreifen der tatsächlichen Stromcharakteristik dieser Fördereinheit.
c) Analysieren der tatsächlichen Stromcharakteristik dieser Fördereinheit und anhand dieser Analyse Signalisieren eines drohenden Verschleißes und/oder einer Fehlfunktion des Fördersystems, insbesondere einer Förderstrecke dieser Fördereinheit.

Gemäß einer Ausführungsform kann die Stromcharakteristik einer Fördereinheit eine von der Fördereinheit verbrauchte Strommenge umfassen.

Um eine Störung selbstkonsistent zu detektieren, so dass eine vorherige Kalibration nicht unbedingt erforderlich ist, kann gemäß einer Ausführungsform ein Abgreifen der tatsächlichen Stromcharakteristik der Fördereinheit bei Nulllast und/oder bei regulärer Belastung punktuell und/oder über einen zeitlichen Verlauf hinweg und Übermitteln dieser tatsächlichen Stromcharakteristik an das Hintergrundsystem erfolgen. Und gemäß einer Ausführungsform kann ein Erfassen, Vergleichen und Analysieren der tatsächlichen Stromcharakteristik der Fördereinheit über einen zeitlichen Verlauf hinweg und/oder über eine Mehrzahl von Fördereinheiten erfolgen.

Gemäß einer weiteren Ausführungsform kann das Analysieren der tatsächlichen Stromcharakteristik ein Analysieren von Steigung und/oder Variabilität umfassen.

Einige Ausführungsformen verbessern eine Planbarkeit der Wartung. Gemäß einer Ausführungsform kann ein Ziehen von Rückschlüssen erfolgen anhand des durchgeführten Analysierens der tatsächlichen Stromcharakteristik auf eine Art der Fehlfunktion und/oder auf eine bis zu einem voraussichtlichen Ausfall der Fördereinheit verbleibende Dauer. Gemäß einer weiteren Ausführungsform kann anhand der durchgeführten Analysen aller Fördereinheiten ein Generieren eines Zustandsabbilds aller Fördereinheiten in einer Abbildung und/oder einer Dringlichkeits-Rangordnung zur Wartung aller erfasster Fördereinheiten erfolgen.

Die vorgeschlagene Condition-Monitoring-Lösung erfordert vorzugsweise eine dezentrale Motorstartertechnologie und somit ein dezentrales Antreiben des Fördersystems oder zumindest eine Möglichkeit, die Stromcharakteristik einzelner Fördereinheiten zu registrieren. Ein Abgreifmittel, beispielsweise ein Strom- und/oder Spannungsmessgerät, kann prinzipiell auch nachträglich hinzugefügt werden. Wenn eine Förderstrecke mindestens ein Förderband umfasst, kann die Fördereinheit besonders einfach realisiert werden. Zudem ist ein Erkennen von Wartungsfällen einfach möglich, da sich ein Fehler im Betrieb eines Förderbandes rasch in der verbrauchten Strommenge niederschlägt.

Ausführungsformen der Erfindung werden nachfolgend anhand der Figuren beispielsweise näher erläutert. Dabei zeigen:
- Figur 1: typische Antriebsregelungen in Gepäckfördersystemen;
- Figur 2: Stromkurve eines Förderbandes in Abhängigkeit von seiner Beladung;
- Figur 3: ein Förderband mit seinen Hauptkomponenten; und
- Figur 4: Stromkurven von Förderbändern mit und ohne Anomalien.

Theoretisch sollten Förderer 3 mit gleicher Länge, gleichem Motortyp, gleicher Fördergeschwindigkeit, gleichem Winkel und gleicher Riemenspannung ohne Last den gleichen Strom verbrauchen. Kleine Abweichungen im Motorwirkungsgrad und der Leistungsfaktor in verschiedenen Betriebspunkten ist Ursache dafür, dass Strom und Drehmoment nicht genau direkt proportional zueinander sind. Die Beziehung zwischen Induktionsmotorstrom und Wellenmoment um den Volllaststrom ist jedoch nahezu direkt proportional zum Strom und umgekehrt. Für einen ein Förderband antreibenden Motor im lastfreien Zustand muss einzig das Drehmoment ausreichend sein, um die Reibung zwischen Riemen und Lager zu überwinden. Dieser Nullaststrom kann verwendet werden, um eine Überwachung des aktuellen Zustands für Gepäckfördersysteme zu erstellen.

Das vom Motor für das Antreiben des Förderbandes erforderliche Drehmoment T ist abhängig vom Durchmesser D der Umlenkrolle, externe Kraft F, der Masse M der vom Förderband zu transportierenden Ladung (typischerweise ein oder mehrere Gepäckstücke), der Graviation g, dem Reibungskoeffizient µ des Förderbands, dem Steigungswinkel Φ und einem mechanischen Faktor β, der bei idealer Einstellung der Fördereinheit 3 ist.

Wenn die Stromcharakteristik an jedem Förderer 3 gemessen wird, wenn dieser im Leerlauf betrieben wird, lässt sich hieraus auf den Zustand dieses Förderers 3 schließen. Eine im Leerlauf gemessene Stromcharakteristik weist keine Schwankungen durch Belastung auf und ist daher am verlässlichsten. Leerlaufzustände treten in Phasen mit niedrigem Gepäckvolumen zufällig auf.

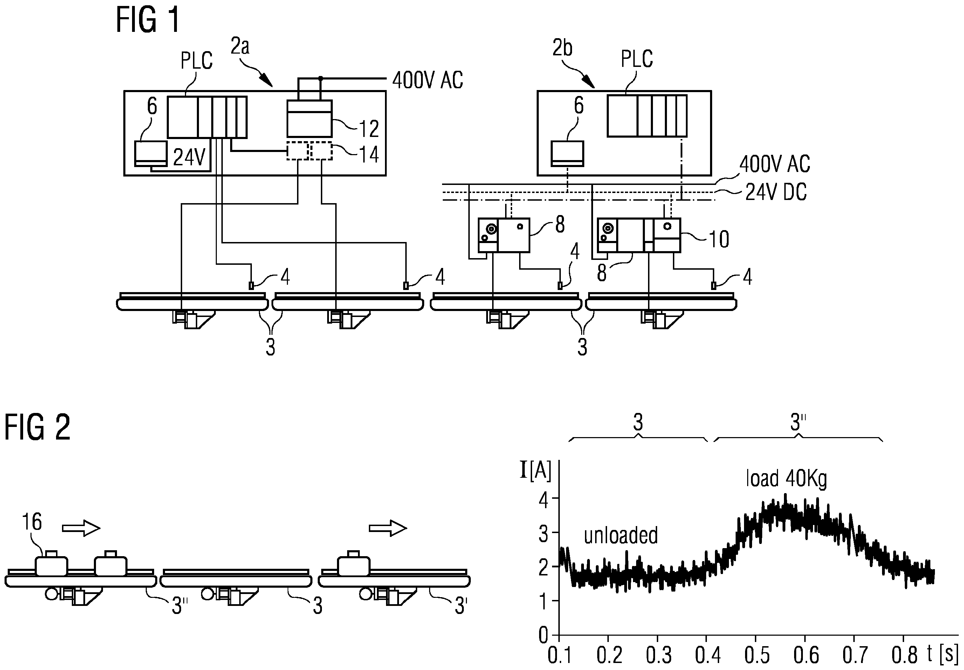

Figur 1 zeigt schematisch Fördersysteme 2 mit zentraler (Figur 1a) und dezentraler (Figur 1b) Motorstartertechnologie wie sie in Flughafen-Gepäckfördersystemen typischerweise ausgestaltet sind. In den gezeigten Ausführungsformen weist jede Fördereinheit 3 nur eine Förderstrecke/Förderer 3 auf. Es ist auch möglich, dass eine Fördereinheit 3 mehrere Förderstrecken/Förderer 3 umfasst. Jede Fördereinheit 3 ist mit einem Motor und Motorstarter 8 und einem Sensor 4 ausgestattet und mit einer Stromquelle 6 verbunden. Das System weist allenfalls einen Frequenzwandler 10, einen Schutzschalter 12 und eine Schütz 14 auf. Eine PLC-Logik (Programmable Logic Controller - SPS, speicherprogrammierbare Steuerung) ist ausgestaltet zu erkennen, ob ein solcher Leerlaufzustand vorliegt, allfällig unterstützt anhand des Inputs eines Signales des Sensors 4. Zum Messen des Leerlaufzustands benötigt die SPS eine Softwaremodifikation, so dass der Strom auf jedem Förderer 3 ohne Last (Nulllastzustand - Bedingung für besonders gut vergleichbare Messwerte) gemessen wird. Ein Nulllastzustand liegt beispielsweise vor direkt nachdem ein Gepäckstück 16 den Förderer 3 verlassen hat. Dies kann mit dem Sensor 4 festgestellt werden oder erkannt werden anhand der durchgeführten Förderlänge. Die Stromcharakteristik des Nulllastzustands kann abgegriffen werden direkt im Anschluss an eine erfolgte Belastung bzw. durchgeführte Förderung, direkt nachdem das Gepäckstück 16 den Förderer 3 verlassen hat unmittelbar bevor der Motor 8 dieses Förderers 3 ausgeschaltet wird.

Figur 2 zeigt die Stromkurve I(A) als Stromcharkteristik einer beladenen Fördereinheit 3" und einer Fördereinheit 3 unter Nulllast gemäß einer weiteren Ausführungsform der Erfindung.

Ein höherer mechanischer Widerstand (mechanischer Faktor β) führt zu einem höheren Drehmoment des Motors. Die Fördersysteme von großen Flughäfen arbeiten mit mehreren tausend Förderbändern 7, wobei eine Fördereinheit 3 ein oder mehrere Förderbänder umfasst. Wenn nun eine Gruppe gleichartiger Fördereinheiten 3 (gleiche Länge, Geschwindigkeit, Winkel, gleicher Kurvenradius, gleicher Motortyp, ...) zu einer Gruppe von Fördereinheiten 3 zusammengefasst wird, ist die Stromcharakteristik dieser gleichartigen Fördereinheiten 3 vergleichbar.

Die vorgesehene Lösung basiert auf Gruppierungsförderern. Eine Gruppe umfasst Förderer 3 gleicher Länge, Geschwindigkeit, Winkel, gleichen Radius für Kurven und gleichen Motortyp. Ziel ist es, möglichst viele Förderer 3 des gleichen Typs zu haben, damit die gemessenen Stromwerte der Stromcharakteristik vergleichbar sind.

Eine Überwachung der Stromcharakteristik kann zur Betriebsüberwachung verwendet werden, da typische Fehler und Unterbrechungen die Stromcharakteristik bereits ändern, bevor es zum Totalausfall kommt. Ein Wasserleck im Gebäude (Wasser tropft auf die Förderbänder, welche so durchnässt werden, führt beispielsweise dazu, dass das der Motor mehr Drehmoment benötigt. Und da Drehmoment und Strom proportional sind, brennt irgendwann die Sicherung durch oder ein Schutzschalter schaltet den Motor 8 ab. Auf einem Bandförderer 3 sammeln sich im Laufe der Zeit Ablagerungen zwischen Förderbandriemen und Metallträgerblech an. Ab einer gewissen Menge an Ablagerungen unter dem Förderriemen verändert sich das benötigte Drehmoment des Motors 8. Bei immer weiter ansteigendem Stromverbrauch wird schließlich der Schutzschalter ausgelöst. Die Ablagerungen können jedoch auch dazu führen, dass das Förderband 7 keinen richtigen Halt mehr hat und durchdreht. Dann wird weniger Strom verbraucht, da das Förderband nicht mehr richtig angetrieben wird.

Es gibt viele ähnliche Beispiele, bei denen ein Problem im System aufgetreten ist und das Betriebspersonal darauf aufmerksam geworden ist, als die Leistungsschalter ausgelöst haben. Die Fehlerentwicklung besteht meistens darin, dass sie mit sporadischen Auslöseereignissen (Abschalten eines Schutzschalters) beginnt. In der Regel wird die Auslösefrequenz kürzer und im schlimmsten Fall sind die Förderbänder blockiert und eine Fernbestätigung ist nicht mehr möglich.

Anstatt auf Auslöseereignisse zu warten, können vorhandene, von der Motormanagement-Hardware bereitgestellte Monitorstromdaten verwendet werden, um Abweichungen als Frühindikator für die bevorstehende Entwicklung einer Anomalie zu erkennen.

Motorstarter 8 verfügen über mehrere Schutzklassen, und je nach Motortyp kann die gewünschte Klasse ausgewählt werden. Es benötigt den Mehrfachstrom, bis der Leistungsschalter auslöst. Für einen Motorstarter 8 mit Klasse 10 würde ein Strom, der das Sechsfache des Nennstroms beträgt, 10 Sekunden dauern, bevor der Leistungsschalter auslöst. In Anbetracht dessen, dass ein Fehler normalerweise mit sporadischen Auslösungen beginnt und die Auslösefrequenz mit der Zeit kürzer wird, ist es sinnvoll, sich anbahnende Fehlfunktionen schon früher und nicht erst mit Auslösen des Leistungsschalters zu erkennen. Zu Beginn eines Störfalls liegt der Motorstrom nur leicht über dem Nennstrom. Eine immer kürzere Auslösezeit kann auf einen höheren Strom hindeuten. Wenn auch bei der Maximalbelastung des Förderers 3 bei fehlerfreiem Betrieb der Nennstrom nicht erreicht wird, kann ein Übersteigen des Nennstroms einen drohenden Ausfall vorhersagen.

In der Praxis ist dies nicht der Fall und der Hauptgrund für die Abweichungen sind Schwankungen der mechanischen Einstellungen. Weitere mögliche Ursachen für Abweichungen sind z.B. beschädigte Antriebskomponenten, falsche Einstellungen der Bremsen, verschlechterte Ölqualität, Getriebeschäden, ....

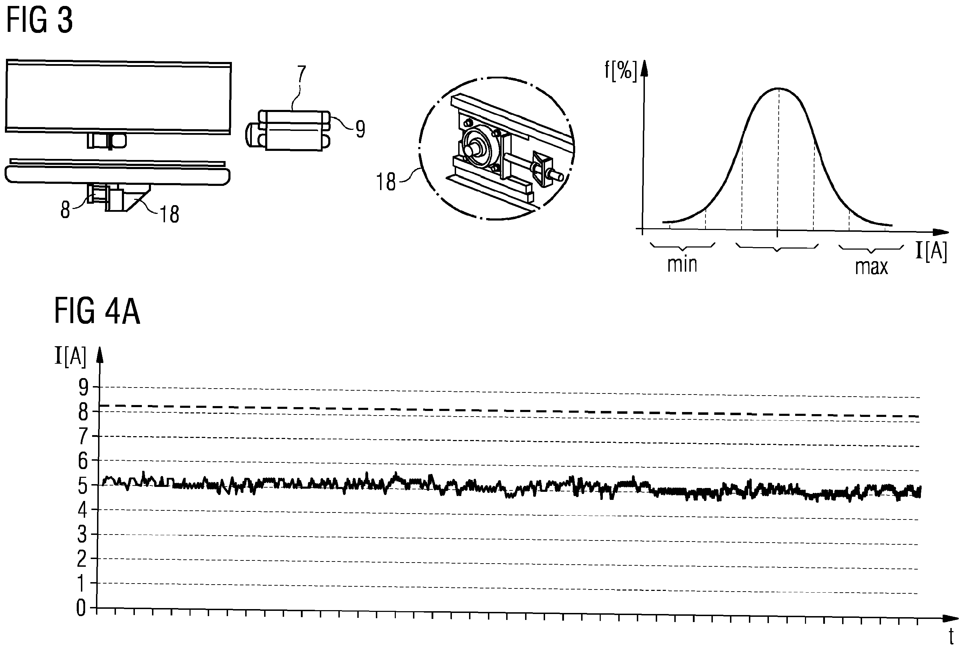

Um die Stromcharakteristik mehrerer Förderer 3 vergleichbar zu machen, werden erfindungsgemäße Förderer 3 wie in Figur 3 gezeigt mit einem Bandspannungsmechanismus 18 ausgestattet, so dass das Förderband 7 um die Umlenkrolle 9 herum stets mit der richtigen Spannung gespannt ist. Dies verringert zudem die Wahrscheinlichkeit von Ausfällen durch durchrutschen des Förderbandes 7 bei zu geringer Bandspannung (meist mit zu geringen Stromwerten assoziiert - min) und durch schwerfällige, leicht blockierbare Förderbänder 7 bei zu hoher Bandspannung (meist mit zu hohen Stromwerten assoziiert - max). Sehr niedrige und sehr hohe Stromwerte sind mit einer hohen Wahrscheinlichkeit mit mechanischen Problemen assoziiert.

Weitere für eine hohe Vergleichbarkeit zu kontrollierende Komponenten sind Förderrahmen, Förderband 7, Riemenscheiben und Lager, Motortyp und Riemenspannungsmechanismus. Bei Förderbändern 7 führen mindestens zwei Riemenscheiben einen von einem Elektromotor angetriebenen Endlosriemen. Über die Antriebsscheibe wird der Riemen 7 vorwärts angetrieben. Der Motor muss ein ausreichendes Drehmoment liefern, um die Reibung des Riemens zu überwinden und die Last nach Bedarf zu transportieren.

Förderer 3 mit perfekt gespannten Riemen 7 (β = 1) verbrauchen im Leerlauf den Durchschnittsstrom. Eine Überspannung (β> 1) führt zu einem höheren und eine Unterspannung (β <1) zu einem niedrigeren gemessenen Strom. Um eine Gruppe von Förderern 3 vergleichbarer zu machen, werden vom Mittelwert abweichende Förderer 3 (β ≠ 1) untersucht, die Riemenspannung nachgewiesen und gegebenenfalls angepasst. Falls die Riemenspannung nicht die Ursache für die Anomalie ist, sind weitere Untersuchungen erforderlich, gefolgt von einer Störungsmeldung.

Ein Motor, der ein höheres Drehmoment liefern muss, verbraucht einen höheren Strom, der gemessen und zur Berechnung des mechanischen Widerstands β verwendet werden kann. Wenn der Großteil aller Förderer 3 aus einer Gruppe richtig eingestellt ist, sollte β=1 gemessen werden. Es können alle aktuellen Daten einer Gruppe von Förderern 3, die zu einer Standardabweichung verarbeitet wurden in einem Diagramm dargestellt werden. Unter Berücksichtigung der Beziehung zwischen Drehmoment und Strom stehen aktuelle Daten zur Verfügung, mit denen mechanische Abweichungen angezeigt werden können. Daher würde ein Förderer 3 mit einem "erwarteten" mechanischen Widerstand (β=1) einen durchschnittlichen Stromwert verbrauchen. Förderer 3 mit mechanischem Widerstand und gleichzeitigem Verbrauch eines höheren oder niedrigeren Stroms als dem "erwarteten" Mittelstrom weisen eine hohe Wahrscheinlichkeit für mechanische Probleme auf (β≠1). Da Fördersysteme mit Standardförderern 3 konstruiert sind, kann dieses in Gruppen von Förderern 3 gleicher Länge mit demselben Motor organisiert werden. Förderer 3 mit der gleichen Länge, dem gleichen Winkel, gleichen mechanischen Einstellungen, gleichen Umwelt- und Belastungsbedingungen und der gleichen Geschwindigkeit, die mit dem gleichen Motor ausgestattet sind, sollten bei fehlerfreiem Betrieb den gleichen Strom verbrauchen und somit dieselbe Stromcharakteristik aufweisen.

Abweichungen von der Stromcharakteristik gelten als Indikator für ein aktuelles mechanisches Problem oder falsche Einstellungen. Wenn der Motor mehr Drehmoment liefern muss (beispielsweise verursacht durch zu starkes Spannen des Riemens) führt dies zu einem höheren Stromverbrauch.

Für ein Gepäckfördersystem eines großen Hub-Flughafens, das über ein Jahrzehnt in Betrieb ist, wird angenommen, dass die Liste der Förderer 3 mit unterschiedlichen Bandspannungen oder -anomalien lang ist. Es wird einige Monate dauern, bis das gesamte System überprüft und fehlerfrei ist. Das Ergebnis nach Korrekturmaßnahmen ist, dass alle Förderer 3 derselben Gruppe den gleichen Strom verbrauchen. Die letzte Phase ist eine kontinuierliche Überwachung der aktuellen Stromcharakteristikdaten.

Der Zustand der Stromcharakteristik aller Förderer 3 des gesamten Fördersystems soll auf einen Blick in der Art eines Armaturenbretts ersichtlich sein. Hierzu kann die Variabilität der Stromcharakteristik einzelner Fördereinheiten 3 gegen ihre normierte Steigung geplottet werden. Ausreißer liegen außerhalb einer Ansammlung fehlerfrei funktionierender Fördereinheiten 3. Mechanische Ausfälle führen häufig zu einer Stromerhöhung. Bei einem Ausfall lösen Leistungsschalter 12 oder Überstromschutzgeräte 14 aus. Bei hohem Steigungswinkel tritt eine Störung rasch auf, bei niedrigem Steigungswinkel tritt eine Störung langsamer auf, so dass anhand der Abweichung auf eine Dringlichkeit der Wartung geschlossen werden kann.

Gemäß einer Ausführungsform kann ein KPI-Wert des gesamten Systems dargestellt werden basierend auf einem Quotienten aus fehlerbehaften Variabilitätswerten und den Variabilitätswerten aller Fördereinheiten 3.

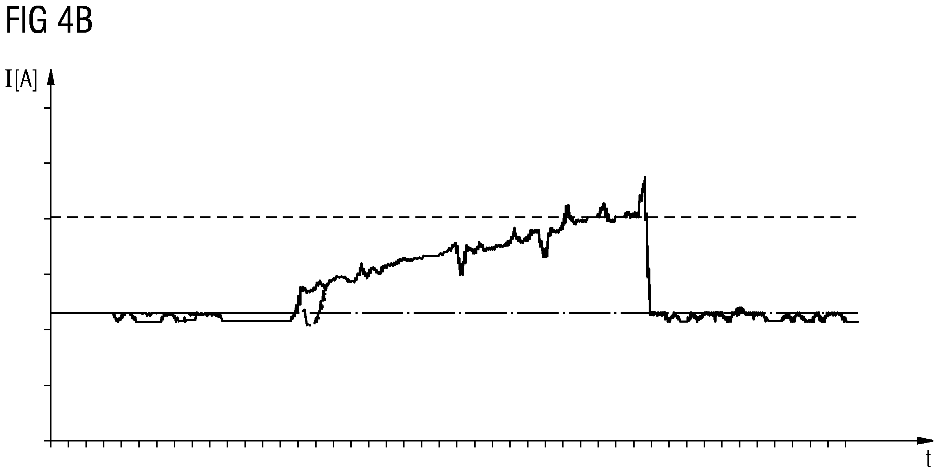

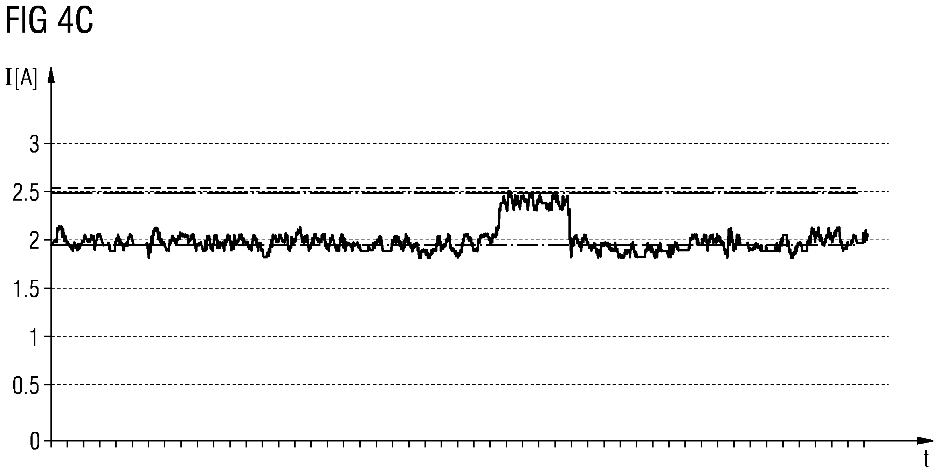

Figur 4 zeigt Stromkurven von einer Fördereinheit 3 bei fehlerfreiem Betrieb ohne Anomalien (Figur 4a), von einer Fördereinheit 3 mit einer langsam auftretenden Fehlfunktion (beispielsweise ein Getriebeausfall mit zunächst sporadischem Überdrehen, im weiteren Verlauf würde dies zum vollständigen Blockieren des Motors führen) und deren Behebung (Figur 4b) sowie die Stromkurve einer Fördereinheit 3 mit einer plötzlich auftretenden Fehlfunktion (ein zwischen Seitenschutz und Förderband eingeklemmter Lumpen) (Figur 4c). Nach Beheben der Störung nimmt die Stromcharakteristik sofort wieder die Werte des fehlerfreien Betriebs an.

Die Erfindung wird gemäß einer Ausführungsform ein Überwachungssystem liefern, das mechanische Probleme in Fördersystemen anzeigt, indem Förderer 3 nach demselben Typ und Motor gruppiert werden. Messen der Stromcharakteristik in definierten Zeitintervallen und bei Nulllast, evtl mit zusätzlichen Daten und Korrelationen zu Start / Stopp und Betriebsstunden. Jedes Förderband 7 verfügt über Spannstationen zum Einstellen des Förderriemens 7. Eine falsche Einstellung führt zu Über- oder Unterspannung, eine der Hauptverschleißursachen.

Die Erfindung betrifft ein System, das aktuelle Messungen einer Gruppe von Fördereinheiten 3 verwendet, den mathematischen Durchschnitt berechnet und Ausreißer extrahiert. Es wird angenommen, dass die Ausreißer in beiden Richtungen falsch eingestellte Förderereinheiten 3 anzeigen, die höchstwahrscheinlich eine verringerte Nutzungsdauer haben.

Mit der Erfindung können solche Einstellungsfehler bei Auftreten sofort angezeigt werden, und auch andere potenzielle Probleme werden anhand der Veränderung der Stromcharakteristik für das Wartungspersonal zur Wartung sichtbar. Ein weiterer Vorteil ist, dass der Zustand eines gesamten Fördersystems sichtbar und drohende und bereits geschehene Ausfälle (letzteres ist zu vermeiden) in Echtzeit feststellbar sind. Zum anderen wird die Stromwerttendenz überwacht. Auftretende Abweichungen vom Durchschnitt dienen als frühzeitiger Hinweis auf einen sich entwickelnden Fehler.

Das System verwendet aktuelle Daten von einer Gruppe von Fördereinheiten 3 desselben Fördertyps, um Ausreißer als Indikator für einen drohenden und/oder bereits geschehenen Ausfall und/oder falsche mechanische Einstellungen zu identifizieren.

Dies bietet auf sehr zuverlässige Art ein System, das ein Hintergrundsystem, beispielsweise eine Datenbank, kontinuierlich mit aktuellen Daten versorgt, um Verschleiß oder bevorstehende Probleme, die möglicherweise zu Ausfallzeiten führen können, frühzeitig zu erkennen.

Gemäß einer Ausführungsform umfasst bzw. verwendet das System bzw. Verfahren zur Zustandsüberwachung einen Datenverarbeitungsserver und ein 4G-Modems mit dem vorhandenen lokalen Netzwerk (LAN). Daten können von einer programmierbaren Logiksteuerung (SPS) abgerufen werden, die das System betreibt. Statistische Daten wie Betriebsstunden und der Gegenwert von Starts und Stopps sind aktuell und jederzeit verfügbar. Das wertvollste Merkmal sind die aktuellen Stromflussaufzeichnungen, also die Stromcharakteristik der Motorstarter 8. Mit der Auswertung des Stroms des parametrierbaren elektronischen Überlastschutzes kann eine Funktion bereitgestellt werden, mit der die Verfügbarkeit der Antriebe erhöht werden kann, ebenso wie zuverlässige Meldungen über das Über- oder Unterschreiten von Sollwerten. Die aktuellen Antriebsdaten variieren in Abhängigkeit von der tatsächlich auf den Förderbändern 7 transportierten Last, so dass die Entwicklung einer Fenstererkennung ohne Last erforderlich ist (s.o.).

Nulllast bedeutet, dass der Förderer 3 ohne Beladung läuft. Während des Betriebs treten solche Fenster in Zeiträumen mit geringem Gepäckvolumen häufig auf. Aus Energiespargründen werden Förderbänder 7 in Zeiten mit geringem Volumen abgeschaltet. Immer wenn ein Gepäckstück 16 ein Förderband passiert, ohne dass zusätzliche Gepäckstücke 16 dem Förderband folgen, wird dieses abgeschaltet. Kurz bevor die Leerlaufabschaltung ausgelöst wird, läuft der Förderer 3 leer. Der aktuelle Wert im Leerlauf kurz vor dem Abschalten ist als Nulllaststrom reproduzierbar ist und kann zur Vorhersage von Anomalien verwendet werden.

Der Motorstarter 8 oder Frequenzumrichter 10 jedes Antriebs liefern ständig aktuelle Daten. Abhängig vom tatsächlichen Lastzustand ändern sich diese Werte ständig. In dem Moment, in dem ein Förderer 3 in den Leerlauf geschaltet wurde, aktualisiert das SPS-Programm den Leerlaufwert des Förderers 3. Mit einer solchen Routine kann sichergestellt werden, dass die aktuellen Werte immer aktuell sind und ohne Last gemessen werden.

Nachfolgend werden einige häufige, die Stromcharakteristik verändernde Fehler eines Fördersystems aufgeführt.

Ein häufiger Fehler ist fehlerhaftes Spuren des Gurtes 7. Ein Gurt 7 wird so ausgerichtet und so gespannt, dass der Gurt 7 einen bestimmten Pfad einhält. Bei fehlerhaftem Spuren bewegt sich der Riemen 7 hin zu einer Seite und weicht von dem vorgesehenen Pfad ab. Falsch verlaufende Riemen 7 verursachen normalerweise eine höhere Reibung. Dies kann zu schweren Schäden führen - in fast allen Fällen muss der Riemen ausgetauscht werden, was zu Systemausfällen führt. Häufig löst der betreffende Leistungsschalter aus.

Riemenschlupf durch falsche Riemenspannung kann einen direkten Einfluss auf die Arbeitsleistung haben. Im Laufe der Zeit und aufgrund häufigen Verschleißes mechanischer Teile ist keine ausreichende Reibung mehr vorhanden, um den Riemen zu greifen, was zu übermäßiger Dehnung, hörbarem Quietschen und Transportschlupf führen kann. Eine Abweichung der Riemenspannung wirkt sich auf das vom Motor zu liefernde Drehmoment aus, was zu einer Stromabnahme führt.

Förderbandsysteme werden aus metallischen Bauteilen hergestellt und nutzen sich im Laufe der Zeit und des Gebrauchs ab. Wenn metallische Rollen blockieren, kann der Riemen verrutschen.

Eine weitere Hauptursache für Schäden an Förderbändern 7 sind Ablagerungen. Von den transportieren Gepäckstücken 13 abgefallende Schlösser, Reißverschlüsse und Griffe können zwischen den Riemenscheiben oder unter dem Riemen 7 kommen und Schäden verursachen..

Mit der Zeit verschleißen und versagen Motoren oder Getriebe. In vielen Fällen werden solche Fehler durch Schmiermittelprobleme verursacht. Ein solcher Ausfall führt typischerweise zu einer höheren mechanischen Beständigkeit und wird durch ausgelöste Leistungsschalter bemerkt.

Fast alle Arten elektrischer Probleme oder Verbindungsproblemen, möglicherweise durch Alterung oder Korrosion verursacht, führen zu einem höheren Widerstand und somit zu einem höheren Strom. Unqualifiziertes Wartungspersonal kann das System fehlerhaft einstellen, z. B. über- oder unterspannte Riemen.

Eine systematische Analyse möglicher, zu Ausfallzeiten führender Fehlerursachen, ergibt, dass meist zuerst eine Abweichung des Stromcharakteristik, und dann erst ein Systemausfall auftritt. Daher kann eine Stromüberwachung für ein modernes Zustandsüberwachungssystem unter Verwendung der verfügbaren Motorstarter-Stromdaten für Gepäckfördersysteme herangezogen werden.

Gemäß einer Ausführungsform erfasst das Hintergrundsystem die Daten zweimal pro Tag. Nach der Datenerfassung löscht die SPS ihre aktuellen Datenbausteine. Förderer 3 für Förderer 3 wird der Datenblock immer dann wieder mit aktualisierten aktuellen Werten gefüllt, wenn ein bestimmter Förderer 3 in den Leerlauf (Nulllast) geschaltet wird. Im unwahrscheinlichen Fall, dass der Förderer 3 kontinuierlich läuft und kein Leerlaufereignis auftritt, würde der Wert Null bleiben. Außerdem würden Daten von nicht betriebsbereiten Förderbändern Null bleiben.

Die SPS-Software wird dahingehend modifiziert, dass auf Daten von Motorstartern 8 und Frequenzumrichtern 10 zugegriffen werden kann. Das Hintergrundsystem umfasst einen Datenvorverarbeitungsservers und eine Datenbank, welche entwickelt und konfiguriert wird und als Server mit dem lokalen Netzwerk (LAN) des Flughafens verbunden wird. Eine SPS-Software misst den Strom im Leerlauf. Ein Wartungs-Dashboard, welches Veränderungen des zu erwartenden Stroms anzeigt, wurde entwickelt. Die lokale Lösung wird in die Cloud-basierte Plattform übertragen. Eine systemweite Lösung greift auf Daten von allen Fördereinheiten 3 zu, die auf die Cloud-basierte Plattform übertragen werden. Das Wartungs-Dashboard wird mit der Cloud-Plattform verbunden.

Die Motorstarterdaten einzelner Fördereinheiten 3 wie Stromcharakteristik, allenfalls zusammen mit Betriebsstunden und/oder Start-Stopp-Zählerwerten werden mit der Ereigniszeit, der Gebäude- und Gebietskennung, der Datenbankknoten-ID, dem Fördernamen und dem Motortyp und der Fördergeschwindigkeit verknüpft. Zusätzlich können der Motornennstrom und der theoretische Förderstrom im Leerlauf aufgelistet werden. Die Werte der Stromcharakteristik sollten unter dem Motorennennstrom liegen. Bei einer fehlerfreien Fördereinheit weichen die tatsächlichen Daten über die Zeit nur geringfügig von dem berechneten theoretischen Wert und zudem von dem Mittelwert aller gleichartigen Fördereinheiten 3 ab.

Gemäß einer weiteren Ausführungsform das Hintergrundsystem ausgestaltet ist, die tatsächliche Stromcharakteristik der Fördereinheit 3 über einen zeitlichen Verlauf hinweg und/oder über eine Mehrzahl an vorzugsweise, aber nicht notwendigerweise gleich ausgestalteten Fördereinheiten 3 zu erfassen, zu vergleichen und zu analysieren.

## Patentansprüche

1. System zur Zustandsüberwachung beim Betrieb eines Fördersystems, insbesondere eines Flughafen-Gepäckfördersystems, das Fördereinheiten (3) umfasst, zudem umfassend ein Hintergrundsystem, wobei
a) eine Fördereinheit (3) eine einzelne Förderstrecke und/oder eine Gruppe von Förderstrecken aufweist;
b) eine individuelle Stromcharakteristik einer einzelnen Fördereinheit (3) erfassbar ist;
c) jede einzelne Fördereinheit (3) bei fehlerfreiem Betrieb eine definierte Stromcharakteristik aufweist und das Hintergrundsystem ausgestaltet ist, diese und die tatsächliche Stromcharakteristik dieser Fördereinheit (3) zu registrieren;
d) das Hintergrundsystem ausgestaltet ist, die tatsächliche Stromcharakteristik von dieser Fördereinheit (3) einer Analyse zu unterziehen und anhand dieser Analyse einen drohenden Verschleiß und/oder eine Fehlfunktion des Fördersystems, insbesondere einer Förderstrecke dieser Fördereinheit (3), zu signalisieren.

2. System nach Anspruch 1, **dadurch gekennzeichnet, dass** die Fördereinheit (3) einen oder mehrere dezentrale Motorstarter (8) aufweist und/oder eine Förderstrecke mindestens ein Förderband umfasst.

3. System nach einem der Ansprüche 1 bis 2, **dadurch gekennzeichnet, dass**
die Stromcharakteristik einer Fördereinheit (3) eine von der Fördereinheit (3) verbrauchte Strommenge umfasst.

4. System nach einem der Ansprüche 1 bis 3, zudem umfassend ein Abgreifmittel welches ausgestaltet ist, die Stromcharakteristik der Fördereinheit (3) bei Nulllast und/oder bei regulärer Belastung punktuell und/oder über einen zeitlichen Verlauf hinweg abzugreifen und an das Hintergrundsystem zu übermitteln.

5. System nach einem der Ansprüche 1 bis 4, **dadurch gekennzeichnet, dass**
das Hintergrundsystem ausgestaltet ist, die tatsächliche Stromcharakteristik der Fördereinheit (3) über einen zeitlichen Verlauf hinweg und/oder über eine Mehrzahl an Fördereinheiten (3) zu erfassen, zu vergleichen und zu analysieren.

6. System nach einem der Ansprüche 1 bis 5, **dadurch gekennzeichnet, dass**
die Analyse Steigung und/oder Variabilität der benötigten Strommenge umfasst.

7. System nach einem der Ansprüche 1 bis 6, **dadurch gekennzeichnet, dass**
das Hintergrundsystem ausgestaltet ist, anhand der Analyse Rückschlüsse auf eine Art der Fehlfunktion und/oder auf eine bis zu einem voraussichtlichen Ausfall der Fördereinheit (3) verbleibende Dauer zu schließen.

8. System nach einem der Ansprüche 1 bis 7, **dadurch gekennzeichnet, dass**
das Hintergrundsystem ausgestaltet ist, anhand der durchgeführten Analysen aller Fördereinheiten (3) ein Zustandsabbild aller Fördereinheiten (3) in einer Abbildung und/oder eine Dringlichkeits-Rangordnung zur Wartung aller erfasster Fördereinheiten (3) zu generieren.

9. Verfahren zur Zustandsüberwachung beim Betrieb eines Fördersystems, insbesondere eines Flughafen-Gepäckfördersystems, das Fördereinheiten (3) umfasst, wobei
- eine Fördereinheit (3) eine einzelne Förderstrecke und/oder eine Gruppe von Förderstrecken aufweist; und
- jede einzelne Fördereinheit (3) bei fehlerfreiem Betrieb einen individuelle Stromcharakteristik aufweist;
umfassend die Verfahrensschritte
a) Antreiben des Fördersystems und Erfassen der individuellen Stromcharakteristik einer einzelnen Fördereinheit (3);
b) Abgreifen der tatsächlichen Stromcharakteristik dieser Fördereinheit (3);
c) Analysieren der tatsächlichen Stromcharakteristik dieser Fördereinheit (3) und anhand dieser Analyse Signalisieren eines drohenden Verschleißes und/oder einer Fehlfunktion des Fördersystems, insbesondere einer Förderstrecke dieser Fördereinheit (3).

10. Verfahren nach Anspruch 9, **dadurch gekennzeichnet, dass** die Stromcharakteristik einer Fördereinheit (3) eine von der Fördereinheit (3) verbrauchte Strommenge umfasst.

11. Verfahren nach einem der Ansprüche 9 bis 10, **gekennzeichnet durch**
Abgreifen der tatsächlichen Stromcharakteristik der Fördereinheit (3) bei Nulllast und/oder bei regulärer Belastung punktuell und/oder über einen zeitlichen Verlauf hinweg und Übermitteln dieser tatsächlichen Stromcharakteristik an das Hintergrundsystem.

12. Verfahren nach einem der Ansprüche 9 bis 11, **gekennzeichnet durch**
Erfassen, Vergleichen und Analysieren der tatsächlichen Stromcharakteristik der Fördereinheit (3) über einen zeitlichen Verlauf hinweg und/oder über eine Mehrzahl von Fördereinheiten (3) .

13. Verfahren nach einem der Ansprüche 9 bis 12, **dadurch gekennzeichnet, dass**
das Analysieren der tatsächlichen Stromcharakteristik ein Analysieren von Steigung und/oder Variabilität umfasst.

14. Verfahren nach einem der Ansprüche 9 bis 13, zudem umfassend den Verfahrensschritt
Ziehen von Rückschlüssen anhand des durchgeführten Analysierens der tatsächlichen Stromcharakteristik auf eine Art der Fehlfunktion und/oder auf eine bis zu einem voraussichtlichen Ausfall der Fördereinheit (3) verbleibende Dauer.

15. Verfahren nach einem der Ansprüche 9 bis 14, zudem umfassend den Verfahrensschritt
anhand der durchgeführten Analysen aller Fördereinheiten (3) Generieren eines Zustandsabbilds aller Fördereinheiten (3) in einer Abbildung und/oder einer Dringlichkeits-Rangordnung zur Wartung aller erfasster Fördereinheiten (3).
